(19) Europäisches Patentamt / European Patent Office / Office européen des brevets

(11) **EP 3 765 184 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **19711335.0**

(22) Anmeldetag: **14.03.2019**

(51) Int Cl.:
**B01F 9/10** (2006.01)     **B01F 9/12** (2006.01)
**B01F 15/00** (2006.01)     **B01F 15/02** (2006.01)
**F16J 15/00** (2006.01)     **F16J 15/3232** (2016.01)
**F16J 15/34** (2006.01)

(86) Internationale Anmeldenummer:
**PCT/EP2019/056413**

(87) Internationale Veröffentlichungsnummer:
**WO 2019/175305 (19.09.2019 Gazette 2019/38)**

(54) **MISCHVORRICHTUNG MIT DICHTUNG**

MIXING DEVICE COMPRISING A SEAL

DISPOSITIF DE MÉLANGE POURVU DE JOINT D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2018 DE 102018106184**

(43) Veröffentlichungstag der Anmeldung:
**20.01.2021 Patentblatt 2021/03**

(73) Patentinhaber: **Maschinenfabrik Gustav Eirich GmbH & Co KG**
**74736 Hardheim (DE)**

(72) Erfinder:
• **SEILER, Andreas**
**97941 Tauberbischofsheim (DE)**
• **MÜNKEL, Stefan**
**97900 Külsheim (DE)**
• **MATTER, Tobias**
**74706 Osterburken (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
| EP-A1- 0 354 190 | EP-A2- 0 146 011 |
| EP-A2- 1 424 009 | DE-A1- 2 057 890 |
| DE-C- 970 311 | DE-C1- 19 908 845 |
| DE-U1-202015 003 751 | US-A- 3 215 297 |
| US-A- 3 568 871 | US-A- 4 650 340 |
| US-B2- 7 946 752 | |

EP 3 765 184 B1

**Beschreibung**

Die vorliegende Erfindung betrifft eine Mischvorrichtung mit einem Mischbehälter zur Aufnahme von Mischgut und einem Mischerdeckel, wobei zwischen Mischbehälter und Mischerdeckel eine erste Dichtung vorgesehen ist, wobei ein Mischerständer vorgesehen ist und der Mischbehälter um eine Drehachse drehbar gegenüber dem Mischerständer gelagert ist und die Mischvorrichtung einen Antrieb aufweist, mit welcher der Mischbehälter um die Drehachse gedreht werden kann, wobei der Mischerdeckel an dem Mischerständer befestigt ist.

Häufig sind innerhalb des Mischbehälters Mischwerkzeuge angeordnet, die das Mischgut im Mischbehälter bewegen. Die Dichtungen dienen dazu, ein Entweichen von Mischgut oder Mischgutstäuben aus dem Mischbehälter während des Mischvorgangs zu vermeiden oder zumindest zu reduzieren. Insbesondere bei pharmazeutischen oder giftigen Mischgutbestandteilen ist zudem darauf zu achten, dass Mischgut keinesfalls in die Umgebung geraten kann.

Gerade bei Anwendungen, die hohe Anforderungen an die hygienische Reinigbarkeit aller mit dem Mischgut in Kontakt tretenden Flächen stellen, muss zudem besonderes Augenmerk auf die einfache Reinigbarkeit der Dichtung zwischen Mischerdeckel und Mischbehälter gelegt werden.

Aus der DE 3520409A1 ist bereits eine an einem kreisförmigen Behälterdeckel befestigte Dichtvorrichtung bekannt, die aus einer Dichtlippe besteht, welche auf einer Kantenfläche eines zylinderförmigen Mischbehälters mit diesem in Berührung steht. Liegt die Dichtvorrichtung nicht mehr gleichförmig auf dem gesamten Umfang des Mischbehälters an oder wird der Anpressdruck durch Materialalterung oder Dehnung aufgrund von Temperaturwechseln vermindert, so können Teile von Mischgut aus dem Mischbehälter beim Überwinden der Dichtung direkt in die angrenzende Umgebung austreten. Es gibt Mischbehälter, die während des Mischvorgangs um eine Drehachse gedreht werden. Dabei muss der Behälterdeckel nicht zusammen mit dem Mischbehälter gedreht werden. Insbesondere in diesen Fällen werden an die Dichtung besonders hohe Anforderungen gestellt.

Aus der US 3,215,297 ist eine Verschlusskappe bekannt, die eine Dichtung aufweist. In der US 4,650,340 ist eine Vorrichtung zum Abdichten einer Öffnung einer sich drehenden Trommel beschrieben.

Ausgehend von dem beschriebenen Stand der Technik ist es daher Aufgabe der vorliegenden Erfindung, eine Mischvorrichtung bereitzustellen, welche die beschriebenen Nachteile zumindest verringert.

Erfindungsgemäß wird dies dadurch gelöst, dass zwischen Mischbehälter und Mischerdeckel die erste und eine zweite Dichtung vorgesehen sind, die derart angeordnet sind, dass zwischen der ersten und der zweiten Dichtung ein erster Luftraum gebildet wird. Die Verwendung von zwei Dichtungen, die voneinander beabstandet sind, damit sich der Luftraum bildet, hat die Dichtigkeit insbesondere bei sich drehenden Mischbehältern deutlich erhöht.

In einer bevorzugten Ausführungsform ist der Mischbehälter zylinderförmig und weist eine Kantenfläche auf, wobei die erste Dichtung mit der Kantenfläche in Berührung steht, wobei vorzugsweise auch die zweite Dichtung mit der Kantenfläche in Berührung steht. Die Kantenfläche kann konvex gekrümmt sein.

In dem zwischen den beiden Dichtlippen und dem Mischerdeckel und dem Mischbehälter ausgebildeten Luftraum kann sich während des Mischvorgangs eine geringe Teilmenge von Mischgut absetzen, welches die erste Dichtung überwunden hat. Auch wenn durch die zweiteilige Ausführung des Dichtsystems nur sehr wenig Mischgut die zweite Dichtung zur Umgebung hin überwindet, sind Produktreste im Luftraum nach Beendigung des Mischvorgangs prinzipiell unerwünscht bzw. müssen vor Start des nächsten Mischvorgangs entfernt werden. Darüber hinaus ist auch bei der zweiteiligen Dichtung nicht vollständig ausgeschlossen, dass minimale Mischgutbestandteile beide Dichtungen überwinden und somit in die Umgebung gelangen.

In einer bevorzugten Ausführungsform ist daher vorgesehen, dass die erste Dichtung den ersten Luftraum gegenüber dem Inneren des Mischbehälters abdichtet, während die zweite Dichtung den ersten Luftraum gegenüber dem Äußeren des Mischbehälters abdichtet und ein erster Fluidkanal mit einer im ersten Luftraum angeordneten ersten Fluidkanalöffnung, über welche Fluid in den ersten Luftraum zugeführt oder Fluid aus dem ersten Luftraum abgesaugt werden kann, vorgesehen ist.

Beispielsweise könnte während des Mischvorgangs ein Spülgas über die Fluidkanalöffnung zugeführt werden. Alternativ könnte auch eine Absaugung erfolgen, um eventuell in den ersten Luftraum geratende Mischgutbestandteile abzusaugen. Des Weiteren ist es möglich, dass über die erste Fluidkanalöffnung Reinigungsflüssigkeit in den Luftraum geführt wird, um die Dichtung zu reinigen.

Die Dichtvorrichtung kann beispielsweise aus zwei koaxial zueinander angeordneten Dichtlippen bestehen, welche am Mischerdeckel befestigt sind und mit mindestens einer Kontaktfläche des Mischbehälters in Berührung stehen. Die Kontaktfläche könnte eine Kantenfläche des Mischbehälters sein. Dann sind die beiden Dichtlippen in radialer Richtung voneinander beabstandet. Alternativ könnten die koaxial zueinander angeordneten Dichtlippen auch am Mischbehälter befestigt sein und mit mindestens einer Kontaktfläche am Mischerdeckel in Berührung stehen. Schließlich wäre es auch möglich, dass eine Dichtung am Mischbehälter und eine Dichtung am Mischerdeckel befestigt ist und mit jeweiligen Kontaktflächen des anderen Teils in Berührung stehen.

In einer weiteren bevorzugten Ausführungsform sind die erste und die zweite Dichtung elastisch ausgebildet, wobei die erste und die zweite Dichtung derart angeordnet sind, dass die erste Dichtung elastisch in Richtung des Inneren des Mischbehälters ausgelenkt ist, während die zweite Dichtung elastisch in Richtung des Äußeren des Mischbehälters ausgelenkt ist. Ist der Mischbehälter rotationssymmetrisch zu einer Rotationsachse, wie z.B. zylinderförmig mit einer Zylinderachse ausgebildet, so bedeutet dies, dass die erste Dichtung elastisch in Richtung der Rotationsachse des Mischbehälters ausgelenkt ist, während die zweite Dichtung elastisch in Richtung weg von der Rotationsachse des Mischbehälters ausgelenkt ist.

Durch diese Ausgestaltung ist sichergestellt, dass beide Dichtungen eine Kraft in Richtung des ersten Luftraums ausüben. Insbesondere dann, wenn der erste Luftraum über die erste Fluidkanalöffnung abgesaugt wird, wird dies dazu führen, dass die Dichtungen noch stärker in Richtung des Luftraums bewegt werden, was die Dichtigkeit erhöht.

In einer weiteren bevorzugten Ausführungsform ist vorgesehen, dass die erste und die zweite Dichtung elastisch ausgebildet sind, wobei die erste und die zweite Dichtung derart angeordnet sind, dass sowohl die erste Dichtung als auch die zweite Dichtung in Richtung des Inneren des Mischbehälters ausgelenkt sind. Ist der Mischbehälter rotationssymmetrisch zu einer Rotationsachse, wie z. B. zylinderförmig zu einer Zylinderachse ausgebildet, kann die erste und die zweite Dichtung derart angeordnet sein, dass sowohl die erste Dichtung als auch die zweite Dichtung in Richtung der Rotationsachse des Mischbehälters ausgelenkt sind.

Um die Dichtigkeit noch weiter zu erhöhen und gleichzeitig den Reibungswiderstand auf der Kontaktfläche zu vermindern, können am äußeren Ende der Dichtung nach Innen, d.h. in Richtung des ersten Luftraumes, gerichtete wulstförmige Erhöhungen angeordnet sein, die zu einer linienförmigen Berührung der Kontaktflächen führen. Die Dichtung ist entweder am Mischerdeckel oder am Mischbehälter befestigt. Das äußere Ende der Dichtung ist das Ende der Dichtung, das von dem Element (Mischerdeckel oder Mischbehälter), an welchem es befestigt ist, abgewendet ist.

In einer weiteren bevorzugten Ausführung ist eine dritte Dichtung vorgesehen, die in der geschlossenen Position derart zwischen Mischerdeckel und Mischbehälter angeordnet ist, dass zwischen der ersten Dichtung und der dritten Dichtung sowie gegebenenfalls dem Mischbehälter und/oder dem Mischerdeckel ein zweiter Luftraum gebildet wird.

Die dritte Dichtung kann mit einer korrespondieren Kontaktfläche in Kontakt stehen. Grundsätzlich kann zwischen der dritten Dichtung und der korrespondierenden Kontaktfläche ein kleiner Abstand verbleiben.

Auch diese Maßnahme führt zu einer weiteren Verbesserung der Dichtung.

In einer weiteren bevorzugten Ausführungsform ist vorgesehen, dass die erste und die dritte Dichtung sowie der Mischerdeckel und der Mischbehälter derart ausgebildet und angeordnet sind, dass die dritte Dichtung den Mischbehälter an einer Position berührt oder zu dem Mischbehälter den geringsten Abstand an einer Position hat, die geodätisch tiefer liegt als die Position, an der die erste Dichtung den Mischbehälter berührt.

Die Idee, die hinter dieser Maßnahme steht, ist, das Mischgut, das eventuell die dritte Dichtung überwindet, gegen die Schwerkraft nach oben transportiert werden müsste, um zur ersten Dichtung zu gelangen. Die erfindungsgemäße Anordnung der ersten und der dritten Dichtung reduziert somit den die erste Dichtung erreichenden Mischgutanteil.

In einer weiteren bevorzugten Ausführungsform ist ein zweiter Fluidkanal mit einer zweiten Fluidkanalöffnung im ersten oder zweiten Luftraum vorgesehen, über welche ein Fluid in den ersten bzw. zweiten Luftraum zugeführt werden kann oder aus dem ersten bzw. zweiten Luftraum abgesaugt werden kann.

Falls die zweite Fluidkanalöffnung wie die erste Fluidkanalöffnung im ersten Luftraum angeordnet ist, kann dadurch im ersten Luftraum eine Fluidströmung erzeugt werden, so dass sich möglicherweise im Luftraum befindende Partikel abgesaugt werden. Die Anordnung beider Fluidkanalöffnungen im gleichen Luftraum verhindert somit ein unkontrolliertes Ansaugen von Luft aus dem Mischraum durch die näher zur Mischbehälterachse angeordneten Dichtungen.

So kann dies beispielsweise derart verwirklicht werden, dass die erste Fluidkanalöffnung näher an der Oberkante der Mischbehälterwand angeordnet ist als die zweite Fluidkanalöffnung. Beispielsweise kann dies dadurch erfolgen, dass sich die erste Fluidkanalöffnung über ein Röhrchen bis in den Luftraum hinein erstreckt.

Ist die zweite Fluidkanalöffnung im zweiten Luftraum angeordnet, kann eine Gasströmung zwischen erstem und zweitem Luftraum ausgebildet werden, um Partikel sowohl aus dem ersten als auch dem zweiten Luftraum abzusaugen. Zudem kann eine Reinigungsflüssigkeit verwendet werden, um die Lufträume und die diese begrenzenden Dichtungen zu reinigen. In einer bevorzugten Ausführungsform erfolgt die Gasströmung von dem ersten Luftraum in den zweiten Luftraum.

In einer weiteren bevorzugten Ausführungsform ist mindestens eine Fluidstrommaschine vorgesehen, mit welcher über den ersten Fluidkanal Fluid in den Luftraum zugeführt und über den zweiten Fluidkanal aus dem Luftraum abgesaugt wird.

Weiterhin ist es von Vorteil, wenn zumindest die erste und die zweite Dichtung und am besten auch die dritte Dichtung am Mischerdeckel befestigt sind und in der geschlossenen Position den Mischbehälter berühren.

Bei dieser Ausführungsform kann der Mischbehälter um seine Drehachse gedreht werden, während der Mischerdeckel nicht gedreht wird. Insbesondere dann, wenn der Mischbehälter relativ zur Dichtung gedreht wird, werden besonders hohe Anforderungen an die Abdichtung gestellt. Zudem sind Anwendungsfälle denkbar, in welchen innerhalb des Mischbehälters ein Vakuum erzeugt wird, um beispielsweise das Mischgut zu entgasen.

Um die Dichtigkeit zu erhöhen, ist es von Vorteil, wenn die Dichtungen an Gegenlaufflächen des Mischerbehälters oder des Mischerdeckels, vorzugsweise des Mischerbehälters, anliegen, die gegenüber der Horizontalen geneigt sind.

In einer bevorzugten Ausführungsform kann der Mischerdeckel zwischen einer offenen Position, in welcher der Mischerdeckel eine Einlassöffnung freigibt, und einer geschlossenen Position, in welcher der Mischerdeckel die Einlassöffnung verschließt, hin und her bewegt werden.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:

Figur 1   eine Schnittansicht durch eine erfindungsgemäße Ausführungsform einer Mischvorrichtung,

Figur 2   eine erste Detailschnittansicht,

Figur 3   eine zweite Detailschnittansicht einer Ausführungsvariante der Figur 2 und

Figur 4   eine dritte Detailschnittansicht einer weiteren Ausführungsvariante der Figur 2.

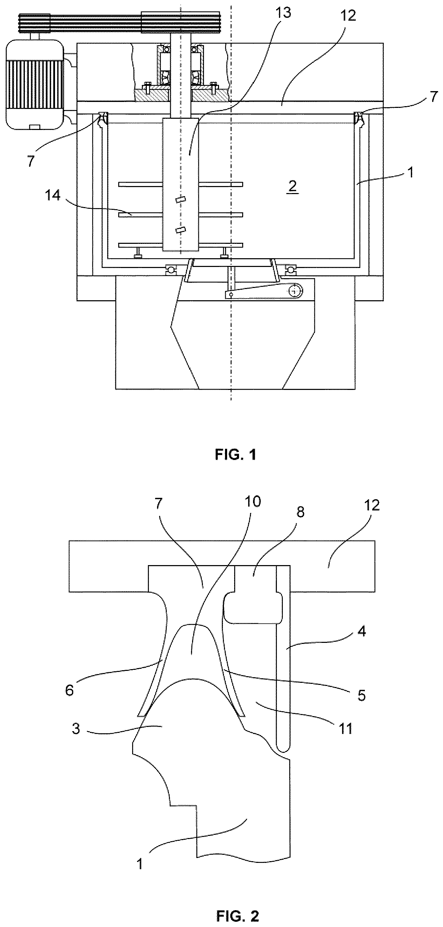

In Figur 1 ist eine Schnittansicht einer erfindungsgemäßen Mischvorrichtung gezeigt. Die Mischvorrichtung weist einen Mischbehälter 1 auf, der im Wesentlichen hohlzylinderförmig ist. Im Inneren des Mischbehälters 1 wird ein Hohlraum 2 zur Aufnahme von Mischgut ausgebildet. Der Mischbehälter 1 ist nach oben offen. Er wird in der in Figur 1 gezeigten Position von einem Mischerdeckel 12 verschlossen. In dem Mischerdeckel 12 ist eine Mischerwelle 13 mit entsprechenden Mischwerkzeugen 14 angeordnet. Der Mischbehälter 1 kann um eine Drehachse, die nicht auf der Achse der Mischerwelle 13 liegt, gedreht werden. Dies hat zur Folge, dass der Mischerdeckel 12 sich nicht zusammen mit dem Mischbehälter 1 dreht. Um dennoch in der geschlossenen Position das Innere 2 des Mischbehälters 1 gegenüber der Umgebung abzudichten, ist ein Dichtelement 7, das im Folgenden noch ausführlich beschrieben wird, zwischen dem Mischerdeckel 12 und der Oberkante des Mischbehälters 1 angeordnet.

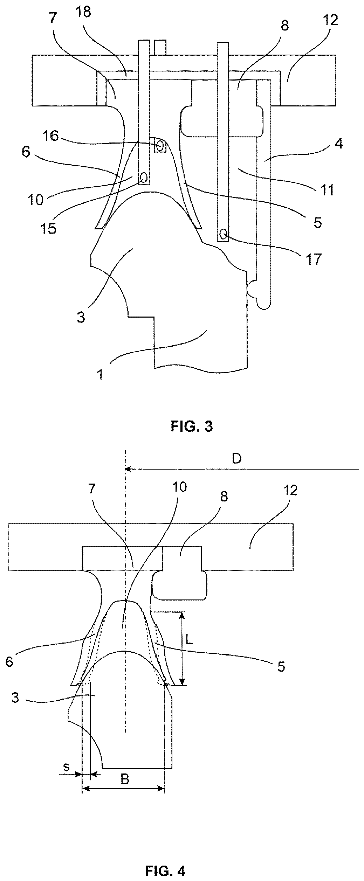

Die Figuren 2 und 3 zeigen zwei Teilschnittansichten des oberen Randes des Mischbehälters 1. Man erkennt, dass der obere Rand des Mischbehälters 1 einen sich nach oben erstreckenden umlaufenden Wulst 3 aufweist, der zwei Flankenflächen aufweist, die sich einerseits nach außen und andererseits nach innen erstrecken. An dem Mischerdeckel 12 ist ein Dichtelement 7 angeordnet, welches zwei, eine V-Form bildende Dichtlippen 5, 6 aufweist, die als erste Dichtung 5 und zweite Dichtung 6 fungieren. Die erste Dichtung 5 liegt an der nach innen weisenden Flankenfläche des Wulstes 3 auf, während die zweite Dichtung 6 an der nach außen weisenden Flankenfläche des Wulstes 3 anliegt. Durch die Ausbildung als Dichtlippe sind die beiden Dichtungen elastisch bewegbar. In der gezeigten Position werden sie von dem Wulst 3 auf der Oberkante des Mischbehälters 1 bereits auseinandergedrückt, so dass beide Dichtungen, d.h. die erste Dichtung 5 und die zweite Dichtung 6, eine Kraft auf den Wulst 3 ausüben. In der gezeigten Ausführungsform ist eine dritte Dichtung 4 vorgesehen, die ebenfalls am Behälterdeckel 12 befestigt ist.

Die dritte Dichtung 4 fungiert hier als Vordichtung und dient zur Zurückhaltung von großen Mengen von Mischgut, die mit hoher Dynamik in den Dichtungsbereich geschleudert werden. Dies kann insbesondere bei einer hohen Drehgeschwindigkeit der Mischerwelle 13 erfolgen. Die dritte Dichtung 4 ist bei der gezeigten Ausführungsform aus Kunststoff und läuft auf einer korrespondierenden Kontaktfläche am Ende der nach Innen weisenden Flankenfläche des Wulstes 3. Alternativ kann die Dichtung 4 am unteren Ende eine von der Mischbehälterachse weg nach außen stehende Verdickung besitzen, die auf der Innenseite der glatten Mischbehälterwand anliegt. Der Abstand zwischen der Kontaktfläche am Wulst 3 und der Vordichtung liegt typischerweise zwischen 0,1 mm und höchstens 3 mm. Idealerweise gleitet die Vordichtung auf der Kontaktfläche. Um ein Einlaufen der Dichtungen in den Kontaktflächen zu vermeiden, sind die Kontaktflächen vorzugweise mit einer besonders harten und verschleißbeständigen Oberfläche durch Härtung oder Beschichtung oder entsprechende Materialwahl geschützt. Zu erkennen ist, dass die Position an welcher die dritte Dichtung den Mischbehälter berührt (Figur 3) oder die Position des Mischbehälters, die der dritten Dichtung am nächsten liegt (Figur 2) geodätisch tiefer liegt als die Position an welcher die erste Dichtung den Mischbehälter berührt.

Die Dichtvorrichtung 7 mit den beiden Dichtlippen, welche die erste Dichtung 5 und die zweite Dichtung 6 bilden, liegt in der geschlossenen Position des Mischerdeckels 12 auf dem umlaufenden Wulst 3 mit geneigten Flankenflächen auf und sorgt für eine Dichtwirkung vom ersten Luftraum 10 in beide Richtungen, d.h. sowohl in Richtung des Behälteräußeren als auch in Richtung des Behälterinneren bzw. in Richtung des zweiten Luftraums 11, der von der dritten Dichtung 3, der ersten Dichtung 5 sowie dem Mischbehälter 1 und dem Mischerdeckel 12 gebildet wird. Zur Befestigung der Dichtungen am Mischerdeckel 12 ist ein Haltering 8 vorgesehen, der mit dem Mischerdeckel 12 verschraubt ist. Dieser Haltering 8 dient zu einer form- oder kraftschlüssigen Verbindung der Dichtungen mit dem Mischerdeckel 12. Alternativ kann zur direkten Befestigung der Dichtvorrichtung im Mischerdeckel die Dichtvorrichtung 7 mit dem Haltering 8 und ggfs. der Dichtung 4 mit Hilfe eines Halterahmens 18 in eine Baugruppe zusammengeführt werden, wobei diese Baugruppe leicht lösbar, z.B. mittels eines Bajonettverschlusses, mit dem Mischerdeckel 12 verbunden ist und als eine Einheit, z.B. zur Reinigung oder zum Austausch entnommen werden kann.

Wie insbesondere in Figur 3 zu erkennen ist, ist eine erste Fluidkanalöffnung 15 vorgesehen, über welche ein Fluid in die erste Luftkammer 10 eingebracht werden kann. Beispielsweise könnte eine zweite Fluidkanalöffnung ebenfalls eine Verbindung zu dem ersten Luftraum 10 darstellen, so dass in den Luftraum 10 ein Spülgas eingeleitet und abgesaugt werden kann, um eventuell in den Luftraum 10 gelangende Mischgutbestandteile zu entfernen. Um die Dichtwirkung der ersten und zweiten Dichtung zu vergrößern, ist es möglich, die Fluidzufuhr und die Fluidableitung derart einzustellen, dass in dem ersten Luftraum 10 sich ein leichter Unterdruck aufbaut, der die erste Dichtung 5 und die zweite Dichtung 6 an den Wulst 3 presst. Ein geeigneter Unterdruck liegt im Bereich zwischen 0,1 und 100 mbar und besonders bevorzugt zwischen 2 und 30 mbar. Alternativ könnte eine weitere Fluidkanalöffnung im Bereich zwischen der ersten Dichtung 5 und der dritten Dichtung 4 positioniert sein. In diesem Fall kann je nach Bedarf eine Spülluft zwischen erstem Luftraum 10 und zweitem Luftraum 11 bewegt werden.

Figur 4 zeigt eine Variante der Dichtung aus Figur 2. Die ringförmige Dichtung 7 besitzt einen mittleren Durchmesser D und besteht aus den Dichtlippen 5 und 6 die jeweils eine Einschnürung in einem Abstand L zum äußeren Ende der Dichtung besitzen, so dass beim Kontakt der Dichtlippen mit dem Wulst 3 die Dichtlippe bevorzugt um diese Einschnürung nach außen ausgelenkt wird. Die Dichtlippen 5 und 6 werden um die Auslenkung s nach außen bewegt, so dass sie mit einer definierten Kraft über eine Breite B auf dem Wulst 3 aufliegen. Die Dichtlippen 5 und 6 sind hier, vergleichbar wie die Dichtung 4 in Figur 3, mit einer in Richtung der Kontaktfläche hervorstehenden Erhebung am äußeren Ende versehen, um einen möglichst linienförmigen Kontakt zwischen Dichtung und Kontaktfläche zu erhalten.

Im unbelasteten Zustand besitzt die Dichtung am äußeren Ende der Dichtlippen 5 und 6 einen lichten Abstand von B ─ 2s, während sie im belasteten Zustand einen lichten Abstand von B zwischen den Kontaktpunkten an der Kontaktfläche aufweist.

Eine besonders hohe Dichtwirkung wird erzielt, wenn die Geometrieparameter der Dichtung in folgendem bevorzugten Wertebereich liegen.

$$L/D = 0{,}01 - 0{,}05$$

$$s/L = 0{,}05 - 0{,}5$$

$$B/D = 0{,}01 - 0{,}1$$

Insbesondere dann, wenn bei einem verschwenkbaren Mischerdeckel der Deckel in seine geschlossene Position gebracht wird, kann auch eine Spülflüssigkeit zwischen die Dichtungen gebracht werden, um die Dichtungen zu reinigen.

Die Fluidzu- und -abführung kann auch intervallweise erfolgen und muss nicht ununterbrochen während des gesamten Misch- oder Reinigungsvorgangs durchgeführt werden.

**Bezugszeichenliste**

| 1 | Mischbehälter |
|---|---|
| 2 | Hohlraum |
| 3 | Wulst |
| 4 | dritte Dichtung |
| 5 | erste Dichtung |
| 6 | zweite Dichtung |
| 7 | Dichtelement |
| 8 | Haltering |
| 10 | erster Luftraum |
| 11 | zweiter Luftraum |
| 12 | Mischerdeckel |
| 13 | Mischerwelle |
| 14 | Mischwerkzeuge |
| 15, 16, 17 | Fluidkanalöffnung |
| 18 | Halterahmen |

**Patentansprüche**

1. Mischvorrichtung mit einem Mischbehälter (1) zur Aufnahme von Mischgut und einen Mischerdeckel (12), wobei zwischen Mischbehälter (1) und Mischerdeckel (12) eine erste Dichtung (5) vorgesehen ist, wobei ein Mischerständer vorgesehen ist und der Mischbehälter (1) um eine Drehachse drehbar gegenüber dem Mischerständer gelagert ist und die Mischvorrichtung einen Antrieb aufweist, mit welcher der Mischbehälter (1) um die Drehachse gedreht werden kann, wobei der Mischerdeckel (12) an dem Mischerständer befestigt ist, **dadurch gekennzeichnet, dass** eine zweite Dichtung (6) zwischen Mischbehälter (1) und Mischerdeckel (12) vorgesehen ist und die erste und die zweite Dichtung (6) derart beabstandet angeordnet sind, dass zwischen der ersten und der zweiten Dichtung ein erster Luftraum (10) gebildet wird.

2. Mischvorrichtung nach Anspruch 1, **dadurch gekennzeichnet, dass** der Mischbehälter (1) zylinderförmig ist und eine Kantenfläche aufweist, wobei die erste Dichtung (5) mit der Kantenfläche in Berührung steht, wobei vorzugsweise auch die zweite Dichtung (6) mit der Kantenfläche in Berührung steht.

3. Mischvorrichtung nach Anspruch 1 oder 2, **dadurch gekennzeichnet, dass** die erste Dichtung (5) den ersten Luftraum gegenüber dem Inneren des Mischbehälters (1) abdichtet, während die zweite Dichtung (6) den ersten Luftraum gegenüber dem Äußeren des Mischbehälters (1) abdichtet, und ein erster Fluidkanal mit einer ersten Fluidkanalöffnung, die im ersten Luftraum angeordnet ist, über welche Fluid in den ersten Luftraum zugeführt oder Fluid aus dem ersten Luftraum abgesaugt werden kann, vorgesehen ist.

4. Mischvorrichtung nach einem der Ansprüche 1 bis 3, **dadurch gekennzeichnet, dass** die erste und die zweite Dichtung (6) elastisch ausgebildet sind, wobei die erste und die zweite Dichtung (6) derart angeordnet sind, dass die erste Dichtung (5) elastisch in Richtung des Inneren des Mischbehälters (1) ausgelenkt ist, während die zweite Dichtung (6) elastisch in Richtung des Äußeren des Mischbehälters (1) ausgelenkt ist, wobei vorzugsweise der Mischbehälter (1) rotationssymmetrisch um eine Rotationsachse ausgebildet ist und die erste und die zweite Dichtung (6) derart angeordnet sind, dass die erste Dichtung (5) elastisch in Richtung der Rotationsachse des Mischbehälters (1) ausgelenkt ist, während die zweite Dichtung (6) elastisch in Richtung weg von der Rotationsachse des Mischbehälters (1) ausgelenkt ist.

5. Mischvorrichtung nach einem der Ansprüche 1 bis 3, **dadurch gekennzeichnet, dass** die erste und die zweite Dichtung (6) elastisch ausgebildet sind, wobei die erste und die zweite Dichtung (6) derart angeordnet sind, dass sowohl die erste Dichtung (5) als auch die zweite Dichtung (6) in Richtung des Inneren des Mischbehälters (1) ausgelenkt sind, wobei vorzugsweise der Mischbehälter (1) rotationssymmetrisch um eine Rotationsachse ausgebildet ist und die erste und die zweite Dichtung (5,6) derart angeordnet sind, dass sowohl die erste Dichtung (5) als auch die zweite Dichtung (6) in Richtung der Rotationsachse des Mischbehälters (1) ausgelenkt sind.

6. Mischvorrichtung nach einem der Ansprüche 1 bis 5, **dadurch gekennzeichnet, dass** eine dritte Dichtung (4) vorgesehen ist, die derart zwischen Mischerdeckel (12) und Mischbehälter (1) angeordnet ist, dass zwischen der ersten Dichtung und der dritten Dichtung ein zweiter Luftraum (11) gebildet wird.

7. Mischvorrichtung nach Anspruch 6, **dadurch gekennzeichnet, dass** die erste und die dritte Dichtung (4) sowie der Mischerdeckel (12) und der Mischbehälter (1) derart ausgebildet und angeordnet sind, dass die dritte Dichtung (4) entweder den Mischbehälter (1) an einer Position berührt, die geodätisch tiefer liegt als die Position, an der die erste Dichtung (5) den Mischbehälter (1) berührt oder den geringsten Abstand zu dem Mischbehälter (1) an einer Position hat, die geodätisch tiefer liegt als die Position, an der die erste Dichtung (5) den Mischbehälter (1) berührt..

8. Mischvorrichtung nach einem der Ansprüche 1 bis 7, **dadurch gekennzeichnet, dass** eine zweite Fluidkanalöffnung im ersten oder zweiten Luftraum vorgesehen ist, über welche eine Fluid in den ersten bzw. zweiten Luftraum zugeführt werden kann oder aus dem ersten bzw. zweiten Luftraum abgesaugt werden kann.

9. Mischvorrichtung nach Anspruch 8, **dadurch gekennzeichnet, dass** zumindest eine Fluidstrommaschine vorgesehen ist, mit welcher über die erste Fluidkanalöffnung Fluid in den Luftraum zugeführt und/oder über die zweite Fluidkanalöffnung aus dem Luftraum abgesaugt wird.

10. Mischvorrichtung nach einem der Ansprüche 1 bis 9, **dadurch gekennzeichnet, dass** der Mischerdeckel (12) zwischen einer offenen Position, in welcher der Mischerdeckel (12) eine Einlassöffnung freigibt, und einer geschlossenen Position, in welcher der Mischerdeckel (12) die Einlassöffnung verschließt, hin und her bewegt werden kann.

11. Mischvorrichtung nach einem der Ansprüche 1 bis 10, **dadurch gekennzeichnet, dass** ein einteiliges Dichtelement (7) mit mindesten zwei Dichtlippen vorgesehen ist, wobei die beiden Dichtlippen die erste und die zweite Dichtung (6) bilden.

12. Mischvorrichtung nach einem der Ansprüche 1 bis 11, **dadurch gekennzeichnet, dass** der Mischerdeckel (12) eine Ausnehmung zur Aufnahme von zumindest einer Dichtung aufweist, wobei ein Haltering (8) vorgesehen ist, welcher zusammen mit der zumindest einen Dichtung in die Ausnehmung eingesetzt ist und an dem Mischerdeckel (12) oder einem mit dem Mischerdeckel (12) verbundenen Element befestigt ist, wobei der Haltering (8) für die zumindest eine Dichtung eine kraft- und/oder formschlüssige Befestigung bereitstellt.

13. Mischvorrichtung nach einem der Ansprüche 1 bis 12, **dadurch gekennzeichnet, dass** zumindest die erste und die zweite Dichtung (6) und am besten auch die dritte Dichtung (4) am Mischerdeckel (12) befestigt sind und den Mischbehälter (1) berühren.

14. Mischvorrichtung nach einem der Ansprüche 1 bis 13, **dadurch gekennzeichnet, dass** die Dichtungen an Gegenlaufflächen des Mischerbehälters (1) oder des Mischerdeckels (12), vorzugsweise des Mischerbehälters (1), anliegen, die gegenüber der Horizontalen geneigt sind.

**Claims**

1. A mixing device comprising a mixing container (1) for receiving mixing material and a mixer cover (12), wherein a first seal (5) is provided between the mixing container (1) and the mixer cover (12), wherein there is a mixer stand and the mixing container (1) is mounted rotatably about an axis of rotation with respect to the mixer stand and the mixing device has a drive with which the mixing container (1) can be rotated about the axis of rotation, wherein the mixer cover (12) is fixed to the mixer stand, **characterised in that** there is provided a second seal (6) between the mixing container (1) and the mixer cover (12) and the first and the second seal (6) are so arranged that a first air space (10) is formed between the first and the second seal.

2. A mixing device according to claim 1 **characterised in that** the mixing container (1) is cylindrical and has an edge surface, wherein the first seal (5) is in contact with the edge surface, wherein preferably also the second seal (6) is in contact with the edge surface.

3. A mixing device according to claim 1 or claim 2 **characterised in that** the first seal (5) seals off the first air space with respect to the interior of the mixing container (1) while the second seal (6) seals off the first air space with respect to the exterior of the mixing container (1) and there is provided a first fluid passage having a first fluid passage opening which is arranged in the first air space, by way of which fluid can be fed into the first air space or fluid can be sucked out of the first air space.

4. A mixing device according to one of claims 1 to 3 **characterised in that** the first and the second seal (6) are elastic, wherein the first and the second seal (6) are so arranged that the first seal (5) is deflected elastically in the direction of the interior of the mixing container (1) while the second seal (6) is deflected elastically in the direction of the exterior of the mixing container (1), wherein preferably the mixing container (1) is of a rotationally symmetrical configuration about an axis of rotation and the first and second seals (6) are so arranged that the first seal (5) is deflected elastically in the direction of the axis of rotation of the mixing container (1) while the second seal (6) is deflected elastically in a direction away from the axis of rotation of the mixing container (1).

5. A mixing device according to one of claims 1 to 3 **characterised in that** the first and the second seal (6) are elastic, wherein the first and the second seal (6) are so arranged that both the first seal (5) and also the second seal (6) are deflected in the direction of the interior of the mixing container (1), wherein preferably the mixing container (1) is of a rotationally symmetrical configuration around an axis of rotation and the first and the second seal (5, 6) are so arranged that both the first seal (5) and also the second seal (6) are deflected in the direction of the axis of rotation of the mixing container (1).

6. A mixing device according to one of claims 1 to 5 **characterised in that** there is provided a third seal (4) arranged between the mixer cover (12) and the mixing container (1) in such a way that a second air space (11) is formed between the first seal and the third seal.

7. A mixing device according to claim 6 **characterised in that** the first and the third seal (4) as well as the mixer cover (12) and the mixing container (1) are of such a configuration and arrangement that the third seal (4) either contacts the mixing container (1) at a position which is geodetically lower than the position at which the first seal (5) contacts the mixing container (1) or has the smallest spacing relative to the mixing container (1) at a position which is geodetically lower than the position at which the first seal (5) contacts the mixing container (1).

8. A mixing device according to one of claims 1 to 7 **characterised in that** there is provided a second fluid passage opening in the first or second air space, by way of which a fluid can be fed into the first or second air space or can be sucked out of the first or second air space.

9. A mixing device according to claim 8 **characterised in that** there is provided at least one fluid flow machine, with which fluid is fed into the air space by way of the first fluid passage opening and/or fluid is sucked out of the air space by way of the second fluid passage opening.

10. A mixing device according to one of claims 1 to 9 **characterised in that** the mixer cover (12) can be reciprocated between an open position in which the mixer cover (12) opens an inlet opening and a closed position in which the mixer cover (12) closes the inlet opening.

11. A mixing device according to one of claims 1 to 10 **characterised in that** there is provided a one-piece sealing element (7) having at least two sealing lips, the two sealing lips forming the first and the second seals (6).

12. A mixing device according to one of claims 1 to 11 **characterised in that** the mixer cover (12) has a recess for receiving at least one seal, wherein there is provided a holding ring (8) which is fitted into the recess together with the at least one seal and is fixed to the mixer cover (12) or an element connected to the mixer cover (12), wherein the holding ring (8) provides a force-locking and/or positively locking fixing for the at least one seal.

13. A mixing device according to one of claims 1 to 12 **characterised in that** at least the first and the second seal (6) and best also the third seal (4) are fixed to the mixer cover (12) and contact the mixing container (1).

14. A mixing device according to one of claims 1 to 13 **characterised in that** the seals bear against counterpart running surfaces of the mixing container (1) or the mixer cover (12), preferably the mixing container (1), that are inclined relative to the horizontal.

## Revendications

1. Dispositif de mélange comprenant un récipient de mélange (1) destiné à recevoir un produit à mélanger et un couvercle de mélangeur (12), un premier joint d'étanchéité (5) étant prévu entre le récipient de mélange (1) et le couvercle de mélangeur (12), un support de mélangeur étant prévu, et le récipient de mélange (1) étant monté à pivotement autour d'un axe de rotation par rapport au support de mélangeur et le dispositif de mélange comportant un entraînement permettant la rotation du récipient de mélange (1) autour de l'axe de rotation, le couvercle de mélangeur (12) étant fixé sur le support de mélangeur, **caractérisé en ce qu'**est prévu un deuxième joint d'étanchéité (6) entre le récipient de mélange (1) et le couvercle de mélangeur (12) et **en ce que** le premier et le deuxième joint d'étanchéité (6) sont disposés à distance l'un de l'autre de manière à former un premier espace d'air (10) entre le premier et le deuxième joint d'étanchéité.

2. Dispositif de mélange selon la revendication 1, **caractérisé en ce que** le récipient de mélange (1) est cylindrique et présente une surface de bord, le premier joint d'étanchéité (5) étant en contact avec la surface de bord, de préférence également le deuxième joint d'étanchéité (6) étant en contact avec la surface de bord.

3. Dispositif de mélange selon la revendication 1 ou 2, **caractérisé en ce que** le premier joint d'étanchéité (5) rend étanche le premier espace d'air vis à vis de l'intérieur du récipient de mélange (1), tandis que le deuxième joint d'étanchéité (6) rend étanche le premier espace d'air vis à vis de l'extérieur du récipient de mélange (1), et **en ce qu'**est prévu un premier canal à fluide doté d'une première ouverture de canal à fluide, disposée dans le premier espace d'air, via laquelle du fluide peut être acheminé dans le premier espace d'air ou du fluide peut être aspiré du premier espace d'air.

4. Dispositif de mélange selon l'une des revendications 1 à 3, **caractérisé en ce que** le premier et le deuxième joint d'étanchéité (6) sont élastiques, le premier et le deuxième joint d'étanchéité (6) étant disposés de telle sorte que le premier joint d'étanchéité (5) soit dévié élastiquement en direction de l'intérieur du récipient de mélange (1), tandis que le deuxième joint d'étanchéité (6) soit dévié élastiquement en direction de l'extérieur du récipient de mélange (1), de préférence le récipient de mélange (1) étant symétrique en rotation autour d'un axe de rotation et le premier et le deuxième joint d'étanchéité (6) étant disposés de telle sorte que le premier joint d'étanchéité (5) soit dévié élastiquement en direction de l'axe de rotation du récipient de mélange (1), tandis que le deuxième joint d'étanchéité (6) soit dévié élastiquement dans une direction s'éloignant de l'axe de rotation du récipient de mélange (1).

5. Dispositif de mélange selon l'une des revendications 1 à 3, **caractérisé en ce que** le premier et le deuxième joint d'étanchéité (6) sont élastiques, le premier et le deuxième joint d'étanchéité (6) étant disposés de telle sorte que le premier joint d'étanchéité (5) comme le deuxième joint d'étanchéité (6) soient déviés en direction de l'intérieur du récipient de mélange (1), de préférence le récipient de mélange (1) étant symétrique en rotation autour d'un axe de rotation et le premier et le deuxième joint d'étanchéité (5, 6) étant disposés de telle sorte que le premier joint d'étanchéité (5) comme le deuxième joint d'étanchéité (6) soient déviés en direction de l'axe de rotation du récipient de mélange (1).

6. Dispositif de mélange selon l'une des revendications 1 à 5, **caractérisé en ce qu'**est prévu un troisième joint d'étanchéité (4) qui est disposé entre le couvercle de mélangeur (12) et le récipient de mélange (1) de façon à former un deuxième espace d'air (11) entre le premier joint d'étanchéité et le troisième joint d'étanchéité.

7. Dispositif de mélange selon la revendication 6, **caractérisé en ce que** le premier et le troisième joint d'étanchéité (4) ainsi que le couvercle de mélangeur (12) et le récipient de mélange (1) sont configurés et disposés de telle sorte que le troisième joint d'étanchéité (4), soit ou en contact avec le récipient de mélange (1) à une position géodésiquement plus basse que la position de contact du premier joint d'étanchéité (5) avec le récipient de mélange (1), ou présente le plus faible espacement par rapport au récipient de mélange (1) à une position géodésiquement plus basse que la position de contact du premier joint d'étanchéité (5) avec le récipient de mé-

lange (1).

tale.

**8.** Dispositif de mélange selon l'une des revendications 1 à 7, **caractérisé en ce qu'**est prévue une deuxième ouverture de canal à fluide dans le premier ou le deuxième espace d'air, via laquelle un fluide peut être acheminé dans le premier ou le deuxième espace d'air ou être aspiré du premier ou deuxième espace d'air.

**9.** Dispositif de mélange selon la revendication 8, **caractérisé en ce qu'**est prévue au moins une machine à écoulement de fluide permettant d'acheminer du fluide dans l'espace d'air via la première ouverture de canal à fluide et/ou de l'aspirer hors de l'espace d'air via la deuxième ouverture de canal à fluide.

**10.** Dispositif de mélange selon l'une des revendications 1 à 9, **caractérisé en ce que** le couvercle de mélangeur (12) peut être animé d'un mouvement de va-et-vient entre une position ouverte dans laquelle le couvercle de mélangeur (12) libère une ouverture d'admission et une position fermée dans laquelle le couvercle de mélangeur (12) ferme l'ouverture d'admission.

**11.** Dispositif de mélange selon l'une des revendications 1 à 10, **caractérisé en ce qu'**est prévu un élément d'étanchéité monobloc (7) doté d'au moins deux lèvres d'étanchéité, les deux lèvres d'étanchéité formant le premier et le deuxième joint d'étanchéité (6).

**12.** Dispositif de mélange selon l'une des revendications 1 à 11, **caractérisé en ce que** le couvercle de mélangeur (12) présente un évidement destiné à recevoir au moins un joint d'étanchéité, une bague de retenue (8) étant prévue, laquelle est insérée dans l'évidement avec ledit au moins un joint d'étanchéité et est fixée sur le couvercle de mélangeur (12) ou un élément relié au couvercle de mélangeur (12), la bague de retenue (8) assurant audit au moins un joint d'étanchéité une fixation par complémentarité de force et/ou de forme.

**13.** Dispositif de mélange selon l'une des revendications 1 à 12, **caractérisé en ce qu'**au moins le premier et le deuxième joint d'étanchéité (6) et au mieux également le troisième joint d'étanchéité (4) sont fixés sur le couvercle de mélangeur (12) et sont au contact du récipient de mélange (1).

**14.** Dispositif de mélange selon l'une des revendications 1 à 13 **caractérisé en ce que** les joints d'étanchéité reposent sur des surfaces de roulement antagonistes du récipient mélangeur (1) ou du couvercle de mélangeur (12), de préférence du récipient de mélange (1), qui sont inclinées par rapport à l'horizon-

**FIG. 1**

**FIG. 2**

**FIG. 3**

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3520409 A1
- US 3215297 A
- US 4650340 A